(19) 

**Europäisches Patentamt**
**European Patent Office**
**Office européen des brevets**

(11) **EP 4 231 514 A1**

(12) **DEMANDE DE BREVET EUROPEEN**

(43) Date de publication:
**23.08.2023 Bulletin 2023/34**

(21) Numéro de dépôt: **23157832.9**

(22) Date de dépôt: **21.02.2023**

(51) Classification Internationale des Brevets (IPC):
**H02M 1/34** *(2007.01)*        **H02M 1/00** *(2006.01)*
**H02M 3/335** *(2006.01)*

(52) Classification Coopérative des Brevets (CPC):
**H02M 1/342; H02M 1/0006; H02M 3/33569; H02M 3/33592**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **22.02.2022 FR 2201538**

(71) Demandeur: **Valeo eAutomotive France SAS**
**95800 Cergy (FR)**

(72) Inventeurs:
• **DA CUNHA ALVES, Wendell**
**95892 CERGY PONTOISE (FR)**
• **DIALLO, Massourang**
**95892 CERGY PONTOISE (FR)**
• **MOREAU, Maxime**
**95892 CERGY PONTOISE (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(54) **CIRCUIT D'AMORTISSEMENT DE TENSION ACTIF ET CONVERTISSEUR DE TENSION**

(57) Cet amortisseur actif de tension (108) comporte : une borne de masse (BM) et une borne d'entrée (BE1, BE2) ; une capacité d'amortissement (C) ; un dispositif d'activation d'amortissement (D1, D2) conçu pour connecter la borne d'entrée (BE1, BE2) à une deuxième borne (BC) de la capacité d'amortissement (C) pour charger la capacité d'amortissement (C) par cette deuxième borne (BC) ; un interrupteur (Q) de décharge de la capacité d'amortissement (C) ; un circuit (110) de commande de l'interrupteur de décharge (Q) conçu pour fermer l'interrupteur de décharge (Q) pour que la capacité d'amortissement (C) se décharge par sa deuxième borne (BC) au travers de l'interrupteur de décharge (Q).

Le circuit de commande (110) est alimenté électriquement par la capacité d'amortissement (C) en étant connecté à la deuxième borne (BC) de la capacité d'amortissement (C) pour recevoir du courant de la capacité d'amortissement (C).

[Fig. 1]

EP 4 231 514 A1

## Description

### Domaine technique de l'invention

La présente invention concerne un amortisseur actif de tension, un convertisseur de tension.

### Arrière-plan technologique

Le brevet américain publié sous le numéro US 5,898,581 décrit un amortisseur actif de tension du type comportant :

- une borne de masse et une borne d'entrée conçue pour recevoir une tension d'entrée par rapport à la borne de masse ;
- une capacité d'amortissement présentant une première borne connectée à la borne de masse ;
- un dispositif d'activation d'amortissement conçu pour connecter la borne d'entrée à une deuxième borne de la capacité d'amortissement lorsque la tension d'entrée à cette borne d'entrée atteint un certain seuil, pour charger la capacité d'amortissement par cette deuxième borne ;
- un interrupteur de décharge de la capacité d'amortissement, cet interrupteur de décharge étant connecté à la deuxième borne de la capacité d'amortissement ; et
- un circuit de commande de l'interrupteur de décharge conçu pour fermer l'interrupteur de décharge pour que la capacité d'amortissement se décharge par sa deuxième borne au travers de l'interrupteur de décharge.

Dans cet amortisseur actif de l'art antérieur, l'interrupteur de décharge est contrôlé par un organe de contrôle du convertisseur auquel appartient l'amortisseur actif. Il faut donc acheminer des liens de connexion entre ledit organe de contrôle et cet interrupteur de décharge, ce qui peut occasionner une complexité dans le routage des connexions du convertisseur et un coût supplémentaire.

Il peut ainsi être souhaité de prévoir un amortisseur actif de tension qui permette de commander simplement l'interrupteur de décharge.

### Résumé de l'invention

Il est donc proposé un amortisseur actif de tension du type précité, caractérisé en ce que le circuit de commande est alimenté électriquement par la capacité d'amortissement, en étant connecté à la deuxième borne de la capacité d'amortissement pour recevoir du courant de la capacité d'amortissement.

Grâce à l'invention, une alimentation externe n'est pas nécessaire pour le circuit de commande. Ce dernier peut ainsi être autonome.

De façon optionnelle, le circuit de commande comporte un circuit comparateur conçu pour comparer une tension présentée par la capacité d'amortissement avec au moins un seuil, le circuit de commande étant conçu pour commander l'interrupteur de décharge en fonction de la comparaison.

Ainsi, du fait que la fonction de comparaison peut être implémentée facilement de manière analogique, le circuit de commande peut être réalisé de manière simple, sans nécessiter de traitement par un microprocesseur.

De façon optionnelle également, le au moins un seuil comporte un premier seuil et un deuxième seuil, inférieur au premier, et le circuit de commande est conçu pour fermer l'interrupteur de décharge lorsque la tension de la capacité d'amortissement atteint le premier seuil et pour ouvrir l'interrupteur de décharge lorsque la tension de la capacité d'amortissement atteint le deuxième seuil.

Ainsi, du fait de l'hystérésis, il est possible de commander l'interrupteur de décharge sans horloge fixe. En effet, une simili horloge (de fréquence variable) est réalisée par l'hystérésis.

De façon optionnelle également, le circuit de commande comporte un circuit d'alimentation conçu pour fournir, à partir de la capacité d'amortissement, une tension d'alimentation au circuit comparateur.

Une telle tension d'alimentation permet d'alimenter électrique les composants électriques usuels, comme un amplificateur opérationnel, permettant d'implémenter la fonction de comparaison.

Le circuit de commande peut être monté entre la deuxième borne de la capacité d'amortissement et une borne de sortie, cette borne de sortie étant connectée à une capacité de sortie, cette capacité de sortie étant montée entre la borne de sortie et la borne de masse.

Cette tension d'alimentation est par exemple fournie entre la deuxième borne de la capacité d'amortissement et une borne de référence flottante du circuit d'alimentation.

De façon optionnelle également, l'interrupteur de décharge présente une borne d'entrée de courant connectée à la deuxième borne de la capacité d'amortissement et le circuit de commande est conçu pour commander l'interrupteur de décharge par une tension de commande appliquée entre une borne de commande de l'interrupteur de décharge et sa borne d'entrée de courant.

En effet, dans le brevet US 5,898,581, l'interrupteur est un transistor à effet de champ à grille isolée à canal N de sorte qu'il est commandé entre sa borne de commande et sa borne de sortie de courant. Ainsi, lorsque l'interrupteur est ouvert, la borne de sortie de courant est à un potentiel flottant, de sorte qu'il est nécessaire d'utiliser un pilote isolé pour le commander. Dans cette mise en oeuvre de l'invention, du fait que la borne d'entrée de courant présente une tension fixe, il est possible de commander simplement l'interrupteur sans pilote isolé.

De façon optionnelle également, l'au moins une borne d'entrée comporte deux bornes d'entrée.

De façon optionnelle également, le dispositif d'activation d'amortissement comporte, pour chaque borne d'entrée, une diode présentant une anode connectée à cette borne d'entrée et une cathode connectée à la deuxième borne de la capacité d'amortissement.

Ainsi, le dispositif d'activation d'amortissement peut être réalisé de manière simple par des composants électriques usuels.

De façon optionnelle également, l'amortisseur actif de tension comporte en outre une inductance connectée à une borne de sortie de courant de l'interrupteur de décharge.

Ainsi, du fait de l'inductance, le courant de décharge peut être limité.

Il est également proposé un convertisseur de tension continu-continu comportant :

- un redresseur de tension comportant au moins un interrupteur ; notamment deux interrupteurs, et
- un amortisseur actif de tension selon l'invention, chaque interrupteur étant connecté entre une borne d'entrée respective et la borne de masse de l'amortisseur actif de tension.

De façon optionnelle, le convertisseur de tension continu-continu comporte en outre :

- un transformateur d'isolation galvanique ;
- un convertisseur continu-alternatif connecté à un primaire du transformateur ;

et le redresseur est connecté à un secondaire du transformateur.

Il est également proposé un véhicule automobile comportant :

- des première et deuxième batteries ; et
- un convertisseur de tension continu-continu selon l'invention, connecté entre les première et deuxième batteries.

**Brève description des figures**

L'invention sera mieux comprise à l'aide de la description qui va suivre, donnée uniquement à titre d'exemple et faite en se référant aux dessins annexés dans lesquels :

[Fig. 1] la figure 1 est un schéma électrique simplifié d'un premier exemple de convertisseur de tension selon l'invention,

[Fig. 2] la figure 2 est une schéma électrique simplifié d'un circuit de commande du convertisseur de tension de la figure 1,

[Fig. 3] la figure 3 regroupe des chronogrammes de grandeurs électriques du convertisseur de tension de la figure 1, et

[Fig. 4] la figure 4 est un schéma électrique simplifié d'un deuxième exemple de convertisseur de tension selon l'invention.

**Description détaillée de l'invention**

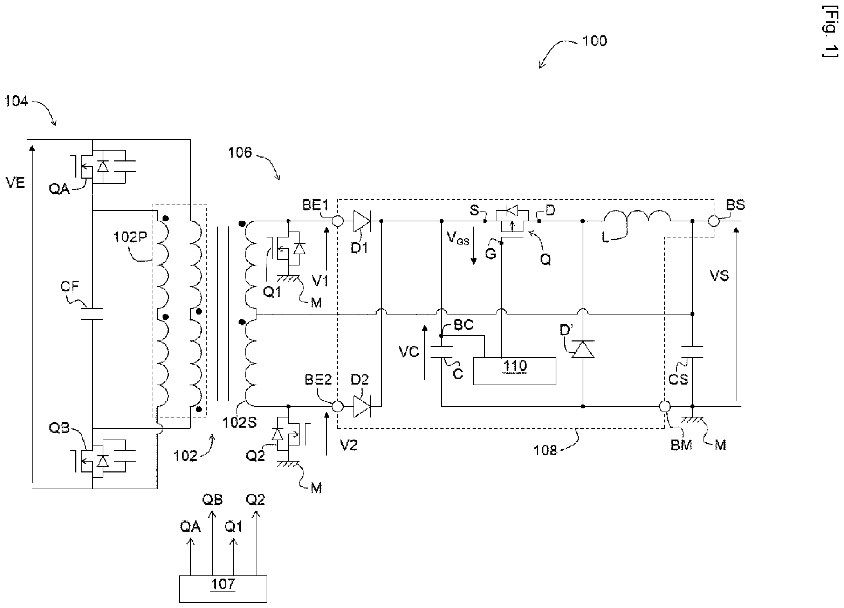

En référence à la figure 1, un premier exemple de convertisseur de tension 100 selon l'invention va à présent être décrit.

Par exemple, le convertisseur de tension 100 est un convertisseur continu-continu isolé, tel qu'un convertisseur de type « flyward », décrit par exemple en détail dans la demande de brevet français publiée sous le numéro FR 3 056 038 A1.

Le convertisseur de tension 100 est par exemple prévu dans un véhicule automobile pour connecter l'une à l'autre deux batteries du véhicule automobile, présentant des tensions différentes. La batterie de tension plus élevée, dite HT pour « haute tension », est généralement utilisée pour alimenter un système de traction du véhicule automobile. Sa tension nominale peut être comprise entre 400V et 800V. La batterie de tension moins élevée, dite BT pour « basse tension », est généralement utilisée pour alimenter des accessoires du véhicule automobile (phares, radio, ordinateur de bord, sièges chauffant, ...) et sa tension nominale peut être comprise entre 10 V et 50 V, par exemple 12 V.

Le convertisseur de tension 100 comporte tout d'abord un transformateur d'isolation galvanique 102.

Le convertisseur de tension 100 comporte en outre un convertisseur continu-alternatif 104 connecté à un primaire 102P du transformateur 102.

Le convertisseur continu-alternatif 104 comporte par exemple deux interrupteurs commandables QA, QB. De préférence, chacun d'eux comporte un interrupteur à semi-conducteur, par exemple un interrupteur à transistor tel qu'un transistor à effet de champ à grille isolée (de l'anglais « Metal Oxide Semiconductor Field Effect Transistor », également désigné par l'acronyme MOSFET) ou bien un transistor bipolaire à grille isolée (de l'anglais « Insulated Gate Bipolar Transistor », également désigné par l'acronyme IGBT).

Le convertisseur continu-alternatif 104 comporte en outre par exemple une capacité CF connectée entre les deux interrupteurs commandables QA, QB. Une tension d'entrée VE continue est ainsi destinée à être reçue aux bornes de l'ensemble des interrupteurs QA, QB et de la capacité CF.

Le convertisseur de tension 100 comporte en outre un redresseur de tension 106 connecté à un secondaire 102S du transformateur 102.

Le redresseur de tension 106 comporte deux interrupteurs Q1, Q2. De préférence, chacun d'eux est commandable et comporte un interrupteur à semi-conducteur, par exemple un interrupteur à transistor tel qu'un MOSFET ou bien un IGBT. Chaque interrupteur commandable Q1, Q2 est connecté entre une extrémité respective du secondaire 102S du transformateur 102 et une masse électrique M. Les interrupteurs commandables Q1, Q2 sont ainsi conçus pour respectivement présenter des tensions V1, V2.

Alternativement, les interrupteurs Q1, Q2 pourraient être respectivement deux diodes.

Le redresseur de tension 106 comporte en outre une capacité de sortie CS connectée entre la masse électrique M et un point milieu du secondaire 102S du transformateur 102. La capacité de sortie CS est ainsi conçue pour présenter une tension de sortie VS continue.

Le convertisseur de tension 100 comporte en outre un dispositif 107 de commande des interrupteurs QA, QB, Q1, Q2. En particulier, le dispositif de commande 107 peut être conçu pour commander les interrupteurs Q1, Q2 en opposition avec un rapport cyclique de 50% (et avec un éventuel temps mort).

Le convertisseur de tension 100 comporte en outre un amortisseur actif de tension 108 conçu pour amortir les tensions V1, V2, c'est-à-dire pour les limiter leur valeur.

Pour cela, l'amortisseur actif de tension 108 comporte tout d'abord deux bornes d'entrée BE1, BE2, par exemple connectées respectivement entre les extrémités du secondaire 102S du transformateur 102 et les interrupteurs commandables Q1, Q2, pour recevoir respectivement les tensions V1, V2. L'amortisseur actif de tension 108 comporte en outre une borne de masse BM connectée à la masse M du convertisseur de tension 100 et une borne de sortie BS connectée à la capacité de sortie CS.

L'amortisseur actif de tension 108 comporte en outre une capacité d'amortissement C présentant une première borne connectée à la borne de masse BM. Cette capacité d'amortissement C est conçue pour présenter une tension de capacité VC.

L'amortisseur actif de tension 108 comporte en outre un dispositif d'activation d'amortissement conçu pour connecter une deuxième borne BC de la capacité d'amortissement C à la borne d'entrée BE1, respectivement BE2, lorsque la tension V1, respectivement V2, atteint un certain seuil.

Le dispositif d'activation d'amortissement peut par exemple comporter deux diodes D1, D2 présentant chacune une anode connectée à la borne d'entrée respective BE1, BE2 et une cathode connectée à la deuxième borne BC de la capacité d'amortissement C. Ainsi, en supposant les diodes D1, D2 idéales, la diode D1, respectivement D2, devient passante lorsque la tension V1, respectivement V2, atteint la tension de capacité VC. La capacité d'amortissement C est alors chargée au travers de cette diode D1, respectivement D2.

L'amortisseur actif de tension 108 comporte en outre un interrupteur Q de décharge de la capacité d'amortissement C. L'interrupteur de décharge Q est commandable et conçu pour permettre, lorsque fermé, une décharge de la capacité d'amortissement C, en particulier dans la capacité de sortie CS. De préférence, l'interrupteur de décharge Q est un interrupteur à semi-conducteur, par exemple un interrupteur à transistor tel qu'un MOSFET ou bien un IGBT.

L'interrupteur de décharge Q présente une borne d'entrée de courant S connectée à la deuxième borne BC de la capacité d'amortissement C, une borne de sortie de courant D et une borne de commande G. L'interrupteur de décharge Q est conçu pour être commandé par une tension de commande $V_{GS}$ appliquée entre sa borne de commande G et sa borne d'entrée de courant S.

Par exemple, l'interrupteur de décharge Q comporte un MOSFET à canal P. Ainsi, les bornes S, D, G comportent respectivement une source, un drain et une grille de ce MOSFET. En outre, toujours par exemple, l'interrupteur de décharge Q est ouvert lorsque la tension $V_{GS}$ est sensiblement nulle et fermé lorsque la tension $V_{GS}$ est négative, par exemple inférieure à - 4 V.

L'amortisseur actif de tension 108 comporte en outre un composant connecté entre la borne de sortie de courant D de l'interrupteur de décharge Q et la borne de sortie BS. Ainsi, lorsque l'interrupteur de décharge Q est fermé, la capacité d'amortissement C se décharge vers la borne de sortie BS au travers de ce composant. La présence de ce composant permet ainsi de connecter la capacité d'amortissement C à la capacité CS alors que la tension VC peut être supérieure, en pratique jusqu'à trois fois supérieure, à la tension VS. De préférence, ce composant est une inductance L qui présente comme avantage de permettre de limiter le courant s'écoulant de la capacité d'amortissement C vers la borne de sortie BS. En effet, comme cela sera expliqué par la suite, lors de la fermeture de l'interrupteur de décharge Q, l'inductance est parcourue par un courant croissant sensiblement linéairement.

L'amortisseur actif de tension 108 comporte en outre une diode de roue libre D' présentant une anode connectée à la borne de masse BM et une cathode connectée entre l'interrupteur commandable et l'inductance L. Cette diode de roue libre D' est conçue pour permettre au courant de continuer de passer dans l'inductance L lorsque l'interrupteur de décharge Q est ouvert.

L'interrupteur de décharge Q, l'inductance L et la diode de roue libre D' peuvent ainsi être considérés comme un convertisseur continu-continu qui convertit la tension VC de la capacité d'amortissement C en la tension de sortie VS.

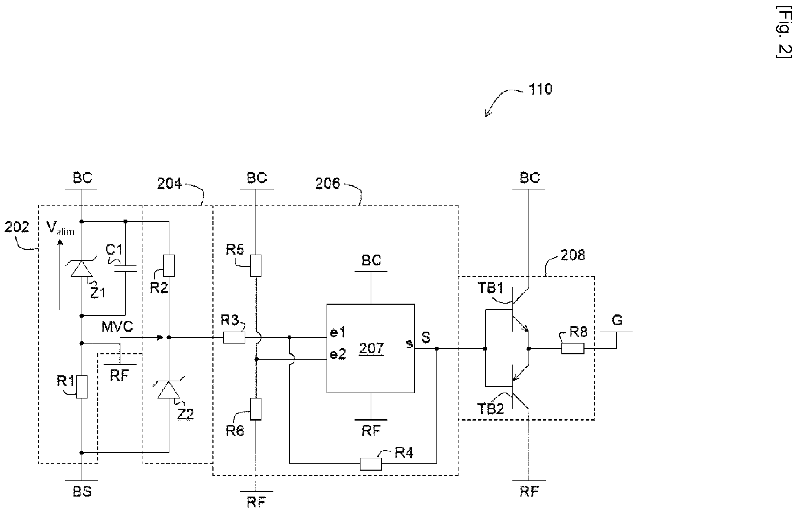

L'amortisseur actif de tension 108 comporte en outre un circuit 110 de commande de l'interrupteur de décharge Q. Le circuit de commande 110 est connecté à la borne de commande G et à la borne d'entrée de courant S de l'interrupteur de décharge Q afin de fournir la tension de commande $V_{GS}$. Le circuit de commande 110 peut en outre être connecté à la borne de sortie BS, comme cela est illustré sur la figure 2.

La borne d'entrée de courant S de l'interrupteur de décharge Q et la borne BC de la capacité d'amortissement C étant connectée l'une l'autre, le circuit de commande 110 est également connecté à le borne BC de la capacité d'amortissement C. Comme cela sera expliqué plus en détail par la suite, le circuit de commande 110 reçoit du courant de la capacité d'amortissement C par la borne BC, afin d'être alimenté électriquement par la capacité d'amortissement C. Cela permet au circuit de commande 110 d'être autonome, c'est-à-dire de ne pas nécessiter une alimentation externe.

En référence à la figure 2, un exemple de circuit de commande 110 va à présent être décrit plus en détail.

Le circuit de commande 110 comporte tout d'abord un circuit d'alimentation 202 conçu pour fournir une tension d'alimentation $V_{alim}$ continue. Cette tension d'alimentation $V_{alim}$ peut par exemple être obtenue à partir d'une tension présente entre la borne de capacité BC et la borne de sortie BS. Dans l'exemple décrit, la tension d'alimentation $V_{alim}$ est fournie entre la borne de capacité BC et une borne de référence flottante RF du circuit d'alimentation 202.

Le circuit d'alimentation 202 peut en outre comporter une diode Zener Z1 et une capacité C1 connectées en parallèle l'une de l'autre. Ces deux composants Z1, C1 sont par exemple connectés entre la borne de capacité BC et la borne de référence flottante RF. Le circuit d'alimentation 202 peut en outre comporter une résistance R1 connectée entre la borne de référence flottante RF et la borne de sortie BS. La diode Zener Z1 présente une tension inverse, à laquelle la tension d'alimentation $V_{alim}$ est sensiblement égale et lissée par la capacité C1. L'association de la diode Zener Z1 et de la résistance R1 permet l'obtention de la borne de référence flottante RF.

Le circuit de commande 110 comporte en outre un circuit 204 de mesure de la tension de capacité VC.

Dans l'exemple décrit, le circuit de mesure 204 comporte une résistance R2 et une diode Zener Z2 connectées à la suite l'une de l'autre entre la borne de capacité BC et la borne de sortie BS. Ainsi, la résistance R2 et la diode Zener Z2 sont connectées l'une à l'autre en un point milieu présentant, par rapport à la référence flottante RF, une tension MVC égale à :

[Math. 1]

$$MVC = Valim - VC + VS - Uz$$

où Uz est une tension inverse de la diode Zener Z2.

Ainsi, comme la tension d'alimentation $V_{alim}$, la tension de sortie VS et la tension inverse de la diode Zener Z2 sont sensiblement constantes, la tension MVC est bien représentative de la tension VC et constitue donc une mesure de cette tension VC.

Le circuit de commande 110 comporte en outre un circuit comparateur 206 conçu pour recevoir la mesure MVC et, à partir de cette dernière, comparer la tension VC de la capacité d'amortissement C avec au moins un seuil. Le circuit comparateur 206 est en outre conçu pour fournir un signal de commande S de l'interrupteur de décharge Q en fonction de la comparaison.

De préférence, le circuit comparateur 206 est à hystérésis. Dans ce cas, il peut être conçu pour fournir le signal de commande S à une valeur de fermeture de l'interrupteur de décharge Q lorsque la tension VC de la capacité d'amortissement C atteint en augmentant un premier seuil S1 et pour fournir le signal de commande S à une valeur d'ouverture de l'interrupteur de décharge Q lorsque la tension VC de la capacité d'amortissement C atteint en diminuant un deuxième seuil S2, inférieur au premier seuil S1.

Par exemple, la valeur de fermeture de l'interrupteur de décharge Q correspond à la tension $V_{alim}$ par rapport à la borne de référence flottante RF, tandis que la valeur d'ouverture de l'interrupteur de décharge Q correspond à 0 V par rapport à la borne de référence flottante RF.

Ainsi, du fait de l'hystérésis, il est possible de commander l'interrupteur de décharge Q sans horloge fixe. En effet, une simili horloge (de fréquence variable) est réalisée par l'hystérésis. Avec le fait que l'interrupteur de décharge Q est commandé entre les bornes G, S, l'absence d'horloge permet de réaliser le circuit de commande 110 de manière très simple.

Pour réaliser l'hystérésis, le circuit comparateur 206 comporte par exemple un circuit comparateur simple 207 (par exemple un circuit analogique intégré tel qu'un amplificateur opérationnel) connecté entre les bornes BC et RF pour être alimenté par la tension d'alimentation $V_{alim}$. Le circuit comparateur simple 207 présente deux entrées e1, e2 et une sortie s conçue pour présenter le signal de commande S. Le signal de commande est défini en fonction de la comparaison entre les tensions sur les entrées e1, e2. Pour appliquer une référence REF sur l'entrée e2, le circuit comparateur 206 peut comporter deux résistances R5, R6 à la suite l'une de l'autre entre la borne de capacité BC et la borne de référence flottante RF afin de former un diviseur de tension en leur point milieu qui est connecté à l'entrée e2. Le circuit comparateur 206 peut en outre comporter deux résistances R3, R4 à la suite l'une de l'autre entre, d'une part, un point milieu entre la résistance R2 et la diode Zener Z2 et, d'autre part, la sortie s. Ces résistances R3, R4 forment ainsi un diviseur de tension en leur point milieu qui est connecté à l'entrée e1. Ainsi, la tension à l'entrée e1 dépend à la fois de la mesure MVC et du signal de commande S, ce qui permet de créer l'hystérésis.

Le circuit de commande 110 comporte en outre un circuit amplificateur de courant 208 connecté entre la sortie s du circuit comparateur 206 et la borne de commande G de l'interrupteur de décharge Q.

Dans l'exemple décrit, le circuit amplificateur de courant 208 comporte deux transistors bipolaires TB1, TB2, respectivement de type NPN et PNP, connectés à la suite l'un de l'autre entre la borne de capacité BC et la borne de référence flottante RF. Les transistors bipolaires TB1, TB2 présentent des bases respectives toutes les deux connectées à la sortie s du circuit comparateur pour recevoir le signal de commande S. Le circuit amplificateur de courant 208 comporte en outre une résistance R8 connectée entre un point milieu des transistors bipolaires TB1, TB2 et la borne de commande G de l'interrupteur de décharge Q.

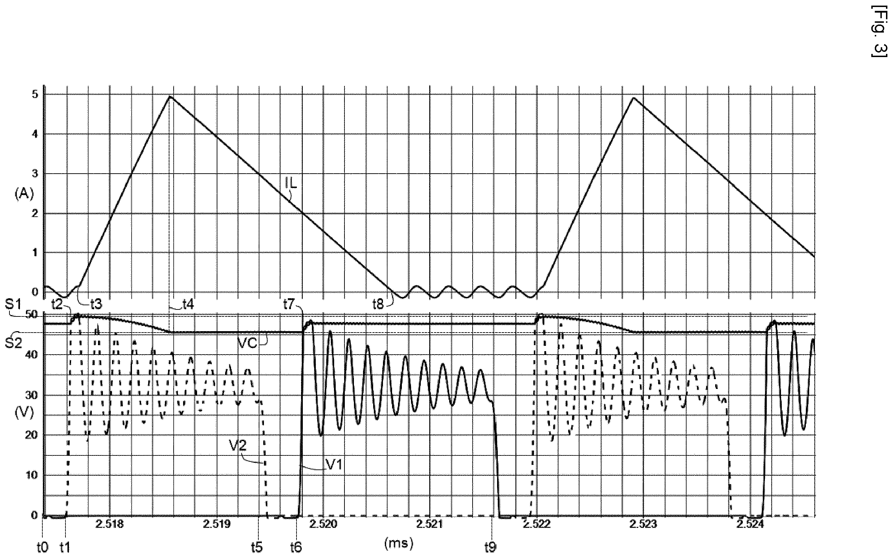

En référence à la figure 3, un exemple de fonctionnement de l'amortisseur actif de tension 108 va à présent être décrit.

Initialement, à un instant t0, les deux interrupteurs Q1, Q2 sont fermés, de sorte que les tensions V1, V2 sont nulles. Les diodes D1, D2 sont bloquées et le courant IL est sensiblement nul.

À un instant t1, le dispositif de commande 107 ouvre l'interrupteur Q2. La tension V2 augmente alors vers une valeur finale. Les diodes D1, D2 étant bloquées, la capacité d'amortissement C n'est pas chargée de sorte que la tension V2 augmente rapidement. Du fait de la présence de capacités et/ou d'inductance parasites, cette augmentation soudaine entraîne l'apparition d'oscillations autour de la valeur finale.

À un instant t2, alors que la tension V2 se trouve dans la partie montante de la première oscillation, la tension V2 atteint la tension de capacité VC et la diode D2 devient passante pour charger la capacité d'amortissement C, ce qui limite l'augmentation de la tension V2. La tension VC augmente alors avec la tension V2.

À un instant t3, le dispositif de commande 110 détecte que la tension VC atteint le premier seuil S1 et, en réponse, ferme l'interrupteur de décharge Q. La capacité d'amortissement C se décharge alors au travers de l'inductance L, ce qui provoque l'apparition d'un courant IL croissant. Le courant IL croit sensiblement linéairement du fait que la tension VC et la tension de sortie VS sont sensiblement constantes, de sorte que la tension aux bornes de l'inductance L est sensiblement constante.

La tension V2 est alors dans la partie descendante de la première oscillation et devient donc inférieure à la tension VC de sorte que la diode D2 redevient bloquée. Les oscillations suivantes sont par exemple de plus faible amplitudes que la première oscillation de sorte que la tension V2 reste inférieure à la tension VC.

À instant t4, le dispositif de commande 110 détecte que la tension VC atteint le deuxième seuil S2 et, en réponse, ouvre l'interrupteur de décharge Q. La capacité d'amortissement C cesse alors de se décharger, de sorte que sa tension VC reste constante au seuil S2. Par ailleurs, l'inductance L est connectée à la masse électrique M au travers de la diode D' qui devient passante. Le courant IL est fourni au travers de la diode D' et décroit.

À un instant t5, le dispositif de commande 107 ferme l'interrupteur Q2, de sorte que la tension V2 diminue jusqu'à zéro.

À un instant t6, le dispositif de commande 107 ouvre l'interrupteur Q1. La tension V1 augmente alors vers une valeur finale. Les diodes D1, D2 étant bloquées, la capacité d'amortissement C n'est pas chargée de sorte que la tension V1 augmente rapidement. Du fait de la présence de capacités et/ou d'inductance parasites, cette augmentation soudaine entraîne l'apparition d'oscillations autour de la valeur finale.

À un instant t7, alors que la tension V1 se trouve dans la partie montante de la première oscillation, la tension V1 atteint la tension de capacité VC et la diode D1 devient passante pour charger la capacité d'amortissement C, ce qui limite l'augmentation de la tension V1. La tension VC augmente alors avec la tension V1, jusqu'à atteindre la partie descendante de la première oscillation. La tension V1 devient alors inférieure à la tension VC de sorte que la diode D1 redevient bloquée. Les oscillations suivantes sont, dans l'exemple décrit, de plus faibles amplitudes que la première oscillation de sorte que la tension V1 reste inférieure à la tension VC. Ainsi, de manière générale, le seuil S1 n'est pas obligatoirement atteint à chaque commutation. Cela peut prendre plusieurs commutations. Dans l'exemple décrit, le seuil S1 est atteint toutes les deux commutations (une commutation de Q1 et une commutation de Q2).

À instant t8, le courant d'inductance IL devient nul.

À un instant t9, le dispositif de commande 107 ferme l'interrupteur Q1, de sorte que la tension V1 diminue jusqu'à zéro.

L'amortisseur actif de tension 108 est alors revenu à un état identique à l'état initial t0 et les étapes décrites précédemment sont répétées.

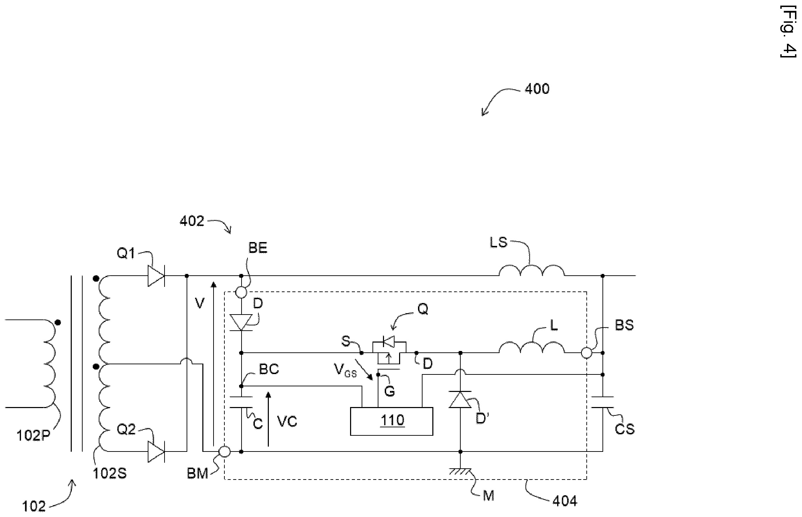

En référence à la figure 4, un autre exemple de convertisseur de tension 400 selon l'invention va à présent être décrit.

Sur la figure 4, le convertisseur continu-alternatif connecté au primaire 102P du transformateur 102 n'est pas représenté. Il pourrait être comme celui de la figure 1, ou bien différent.

Les interrupteurs Q1, Q2 sont cette fois des diodes. Ainsi, les interrupteurs Q1, Q2 ne sont pas commandables, mais commutent suivant l'état du convertisseur de tension.

Le redresseur, désigné par la référence 402, comporte en outre une inductance de sortie LS connectée entre les interrupteurs Q1, Q2 et la capacité de sortie CS.

En outre, l'amortisseur actif de tension, désigné par la référence 404, est similaire à celui de la figure 1, si ce n'est qu'il comporte une seule borne d'entrée BE connectée aux deux interrupteurs Q1, Q2 et que le dispositif d'activation d'amortissement comporte une seule diode D présentant une anode connectée à la borne d'entrée BE et une cathode connectée à la capacité d'amortissement C.

En outre, la borne de masse BM est connectée au point milieu du secondaire 102S du transformateur 102.

Ainsi, une tension d'entrée V est présente entre la borne d'entrée BE et la borne de masse BM, et le l'amortisseur actif de tension 404 permet de l'amortir, protégeant de ce fait les diodes Q1, Q2.

Il apparaît clairement qu'un amortisseur actif de tension tel que celui décrit précédemment permet de simplifier la commande de l'interrupteur de l'amortisseur actif de tension.

On notera par ailleurs que l'invention n'est pas limitée aux modes de réalisation décrits précédemment. Il apparaîtra en effet à l'homme de l'art que diverses modifications peuvent être apportées aux modes de réalisation décrits cidessus, à la lumière de l'enseignement qui vient de lui être divulgué.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Amortisseur actif de tension (108 ; 404) comportant :

- une borne de masse (BM) et une borne d'entrée (BE1, BE2 ; BE) conçue pour recevoir une tension d'entrée (V1, V2 ; V) par rapport à la borne de masse (BM) ;
- une capacité d'amortissement (C) présentant une première borne connectée à la borne de masse (BM) ;
- un dispositif d'activation d'amortissement (D1, D2 ; D) conçu pour connecter la borne d'entrée (BE1, BE2 ; BE) à une deuxième borne (BC) de la capacité d'amortissement (C) lorsque la tension d'entrée (V1, V2 ; V) à cette borne d'entrée (BE1, BE2 ; BE) atteint un certain seuil (VC), pour charger la capacité d'amortissement (C) par cette deuxième borne (BC) ;
- un interrupteur (Q) de décharge de la capacité d'amortissement (C), cet interrupteur de décharge (Q) étant connecté à la deuxième borne (BC) de la capacité d'amortissement (C) ; et
- un circuit (110) de commande de l'interrupteur de décharge (Q) conçu pour fermer l'interrupteur de décharge (Q) pour que la capacité d'amortissement (C) se décharge par sa deuxième borne (BC) au travers de l'interrupteur de décharge (Q) ;

**caractérisé en ce que** le circuit de commande (110) est alimenté électriquement par la capacité d'amortissement (C) en étant connecté à la deuxième borne (BC) de la capacité d'amortissement (C) pour recevoir du courant de la capacité d'amortissement (C).

2. Amortisseur actif de tension (108 ; 404) selon la revendication 1, dans lequel le circuit de commande (110) comporte un circuit comparateur (206) conçu pour comparer une tension (VC) présentée par la capacité d'amortissement (C) avec au moins un seuil (S1, S2), le circuit de commande (110) étant conçu pour commander l'interrupteur de décharge (Q) en fonction de la comparaison.

3. Amortisseur actif de tension (108 ; 404) selon la revendication 2, dans lequel le au moins un seuil (S1, S2) comporte un premier seuil (S1) et un deuxième seuil (S2), inférieur au premier (S1), et dans lequel le circuit de commande (110) est conçu pour fermer l'interrupteur de décharge (Q) lorsque la tension (VC) de la capacité d'amortissement (C) atteint le premier seuil (S1) et pour ouvrir l'interrupteur de décharge (Q) lorsque la tension (VC) de la capacité d'amortissement (C) atteint le deuxième seuil (S2).

4. Amortisseur actif de tension (108 ; 404) selon la revendication 3, dans lequel le circuit de commande (110) comporte un circuit d'alimentation (202) conçu pour fournir, à partir de la capacité d'amortissement (C), une tension d'alimentation ($V_{alim}$) au circuit comparateur (206).

5. Amortisseur actif de tension (108, 404) selon la revendication 3 ou 4, dans lequel le circuit de commande (110) est monté entre la deuxième borne (BC) de la capacité d'amortissement (C) et une borne de sortie (BS), cette borne de sortie (BS) étant connectée à une capacité de sortie (CS), cette capacité de sortie (CS) étant montée entre la borne de sortie (BS) et la borne de masse (BM).

6. Amortisseur actif de tension (108, 404) selon la revendication 4 ou 5 , dans lequel la tension d'alimentation ($V_{alim}$) est fournie entre la deuxième borne (BC) de la capacité d'amortissement (C) et une borne de référence flottante (RF) du circuit d'alimentation (202).

7. Amortisseur actif de tension (108 ; 404) selon l'une quelconque des revendications 1 à 6, dans lequel l'interrupteur de décharge (Q) présente une borne d'entrée de courant (S) connectée à la deuxième borne (BC) de la capacité d'amortissement (C) et dans lequel le circuit de commande (110) est conçu pour commander l'interrupteur de décharge (Q) par une tension de commande ($V_{GS}$) appliquée entre une borne de commande (G) de l'interrupteur de décharge(Q) et sa borne d'entrée de courant (S).

8. Amortisseur actif de tension (108) selon l'une quelconque des revendications 1 à 7, dans lequel l'au moins une borne d'entrée comporte deux bornes d'entrée (BE1, BE2).

**9.** Amortisseur actif de tension (108 ; 404) selon l'une quelconque des revendications 1 à 8, dans lequel le dispositif d'activation d'amortissement (D1, D2 ; D) comporte, pour chaque borne d'entrée (BE1, BE2 ; BE), une diode (D1, D2 ; D) présentant une anode connectée à cette borne d'entrée (BE1, BE2 ; BE) et une cathode connectée à la deuxième borne (BC) de la capacité d'amortissement (C).

**10.** Amortisseur actif de tension (108 ; 404) selon l'une quelconque des revendications 1 à 9, comportant en outre une inductance (L) connectée à une borne de sortie de courant (D) de l'interrupteur de décharge (Q).

**11.** Convertisseur de tension (100 ; 400) continu-continu comportant :

> - un redresseur de tension (106) comportant au moins un interrupteur (Q1, Q2) ; notamment deux interrupteurs, et
> - un amortisseur actif de tension (108 ; 404) selon l'une quelconque des revendications 1 à 10, chaque interrupteur (Q1, Q2) étant connecté entre une borne d'entrée (BE1, BE2 ; BE) respective et la borne de masse (BM) de l'amortisseur actif de tension (108 ; 404).

**12.** Convertisseur de tension (100 ; 400) continu-continu selon la revendication 11, comportant en outre :

> - un transformateur d'isolation galvanique (102) ;
> - un convertisseur continu-alternatif (104) connecté à un primaire (102P) du transformateur (102) ;

et dans lequel le redresseur (106 ; 402) est connecté à un secondaire (102S) du transformateur (102).

[Fig. 1]

[Fig. 2]

[Fig. 3]

[Fig. 4]

Europäisches
Patentamt

European
Patent Office

Office européen
des brevets

**RAPPORT DE RECHERCHE EUROPEENNE**

Numéro de la demande

**EP 23 15 7832**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 9 705 415 B2 (CHICONY POWER TECH CO LTD [TW]) 11 juillet 2017 (2017-07-11) * le document en entier * | 1-5,7-12 | INV. H02M1/34 H02M1/00 H02M3/335 |
| A,D | US 5 898 581 A (LIU RUI [US]) 27 avril 1999 (1999-04-27) * colonne 5, lignes 35-44; figures 1, 2 * * colonne 5, ligne 45 - colonne 6, ligne 44; figures 4, 5, 6 * | 1-12 | |
| A | CN 110 557 003 A (ACER INC) 10 décembre 2019 (2019-12-10) * figure 3 * | 1-12 | |
| A | US 2017/033703 A1 (KIKUCHI HIROKI [JP] ET AL) 2 février 2017 (2017-02-02) * figure 5 * | 1-12 | |
| A | US 2015/381075 A1 (QU PENG [CN] ET AL) 31 décembre 2015 (2015-12-31) * abrégé * | 1-10 | |
| | | | DOMAINES TECHNIQUES RECHERCHES (IPC) |
| A | WO 2018/046755 A1 (VALEO SYSTEMES DE CONTROLE MOTEUR [FR]) 15 mars 2018 (2018-03-15) * figure 1 * | 1-10 | H02M |

Le présent rapport a été établi pour toutes les revendications

| Lieu de la recherche | Date d'achèvement de la recherche | Examinateur |
|---|---|---|
| La Haye | 22 juin 2023 | van Wesenbeeck, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 15 7832

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-06-2023

| Document brevet cité au rapport de recherche | | Date de publication | Membre(s) de la famille de brevet(s) | | Date de publication |
|---|---|---|---|---|---|
| US 9705415 | B2 | 11-07-2017 | AUCUN | | |
| US 5898581 | A | 27-04-1999 | AUCUN | | |
| CN 110557003 | A | 10-12-2019 | AUCUN | | |
| US 2017033703 | A1 | 02-02-2017 | CN | 106411134 A | 15-02-2017 |
| | | | JP | 6563729 B2 | 21-08-2019 |
| | | | JP | 2017034812 A | 09-02-2017 |
| | | | US | 2017033703 A1 | 02-02-2017 |
| US 2015381075 | A1 | 31-12-2015 | CN | 105337503 A | 17-02-2016 |
| | | | TW | 201601436 A | 01-01-2016 |
| | | | US | 2015381075 A1 | 31-12-2015 |
| WO 2018046755 | A1 | 15-03-2018 | FR | 3056038 A1 | 16-03-2018 |
| | | | WO | 2018046755 A1 | 15-03-2018 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5898581 A

- FR 3056038 A1